# EUROPEAN PATENT APPLICATION

(11) **EP 2 523 500 A1**
(43) Date of publication of application: **14.11.2012**
(21) Application number: 11165901.7
(22) Date of filing: 12.05.2011
(51) Int. Cl.: H04W 36/00

(54) **Method and arrangement of performing neighboring cell measurements**

(71) Applicant: ST-Ericsson SA, 1228 Genève (CH)
(72) Inventor: Carlsson, Fredrik, SE-245 63, HJÄRUP (SE)
(74) Representative: Ström & Gulliksson AB

(57) **Abstract**

A method is disclosed for a user equipment having first and second radio access technology capability and registered in a first cell employing the first radio access technology. The method comprises acquiring a neighboring cell list comprising information relating to one or more first neighboring cells employing the second radio access technology, the one or more first neighboring cells being associated with the first cell. The method also comprises performing measurements based on the neighboring cell list to acquire a current neighboring cell information. After performing change of cell from the first cell to a second cell employing the first radio access technology, the method comprises performing measurements to update the current neighboring cell information based on the neighboring cell list comprising the one or more first neighboring cells.

Corresponding computer program product, arrangement and electronic device are also disclosed.

## Description

### Technical Field

The present invention relates generally to the field of performing measurements in wireless cellular networks. More particularly, it relates to a user equipment performing cell measurements associated with a second radio access technology while employing a first radio access technology.

### Background

A multimode user equipment (UE) has at least first and second radio access technology (RAT) capabilities, for example corresponding to GSM and WCDMA.

When a multimode UE camps on (or is otherwise registered in) a serving GSM cell, information about 3G (e.g. WCDMA) neighboring cells (e.g. 3G Neighbor Cell Description) is typically broadcasted by the GSM base station in the system information (e.g. SI 2quater or SI 2ter). See 3GPP documentation TS44.018 chapter 10.5.2.33a "SI 2ter Rest Octets" and TS44.018 chapter 10.5.2.33b, "SI 2quater Rest Octets" for an example of such system information.

Corresponding arrangements for broadcasting second RAT neighboring cell information (e.g. cell identity) by the first RAT may be present for other examples of the first and second radio access technologies.

In general, some delay may be involved until the multimode UE has received all relevant information regarding the neighboring cells. Consequently, there may be a time period where the multimode UE does not have complete information about the neighboring cells of the second RAT.

For example, in GSM the information in SI 2quater and SI 2ter may be split over more than one broadcast transmission instance. A typical GSM network may broadcast WCDMA neighboring cell information in SI 2quater. SI 2quater usually comprises several instances. Since several WCDMA neighboring cells are typically defined for the serving GSM cell, the SI 2quater may possibly also comprise information regarding several WCDMA frequency bands. Since SI 2quater is multiplexed on only TC=4 or TC=5 (where TC = (FN DIV 51) mod (8), FN = FrameNumber, see 45.002, chapter 6.3.1.3 "Mapping of BCCH data"), there is a delay while the UE waits for the SI 2quater to be broadcast.

When the multimode UE has information about the neighboring cells of the second RAT, it can start to perform measurements (e.g. signal strength measurements and/or quality measurements) on those neighboring cells to determine whether or not a cell re-selection to a second RAT neighboring cell should be performed.

As an example, a typical requirement for cell re-selection from GSM to WCDMA is that all of the following conditions should be fulfilled:
1. The WCDMA neighboring cells are known (i.e. the UE has received broadcast system information).
2. Measurements on the WCDMA neighboring cells are completed.
3. The measurements for the candidate WCDMA neighboring cell and the conditions of the serving GSM cell fulfill some criteria for cell re-selection (e.g. signal strength comparisons between cells and/or to signal strength thresholds).
4. The candidate WCDMA neighboring cell fulfills the criteria during a specific period of time (e.g. 5 seconds as specified in 3GPP documentation TS45.008, chapter 10.1.3.2 "Algorithm for cell re-selection from GSM to UTRAN").

Thus, it is clear that considerable time may pass before the UE has received the second RAT (e.g. corresponding to WCDMA) neighboring cell information and can start performing the cell measurements necessary for a RAT re-selection to be possible. This is particularly evident when a cell re-selection from a first cell of the first RAT (e.g. corresponding to GSM) to a second cell of the first RAT (e.g. corresponding to GSM) has just occurred. Hence, due to this delay, more time may be spent in the first RAT than actually justified by the radio conditions.

Therefore, there is a need for methods and arrangements that shorten the delay until a UE can make a RAT cell re-selection decision.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of the invention to obviate at least some of the above disadvantages and to provide methods, arrangements and devices that shorten the delay until a UE can make a RAT cell re-selection decision.

A first aspect of the invention is method for a user equipment having first and second radio access technology capability and registered in a first cell employing the first radio access technology. The method comprises acquiring a neighboring cell list comprising information relating to one or more first neighboring cells employing the second radio access technology (the one or more first neighboring cells being associated with the first cell), performing measurements based on the neighboring cell list to acquire a current neighboring cell information, and performing a change of cell from the first cell to a second cell employing the first radio access technology. The method also comprises (after the change of cell) performing measurements to update the current neighboring cell information based on the neighboring cell list comprising the one or more first neighboring cells.

The term registered is meant to embrace all variants of registration of a UE in a cell (regardless of RAT) during any UE mode (e.g. idle, connected). For example, the term registered comprises the terms camping (e.g. for GSM idle mode), being served by (e.g. for GSM connected mode), and registered (e.g. for WCDMA).

A change of cell may comprise one of a cell re-selection (during an idle mode) and a cell handover (during a connected mode).

The information relating to the neighboring cells in the neighboring cell list may for example some sort of cell identity. For example, according to 3GPP specification TS 44.018, the 3G Neighbor Cell Description contains Index_Start_3G, UTRAN FDD Description and UTRAN TDD Description.

The neighboring cell information may for each cell comprise, for example, one or more of: a cell identity, a signal strength indication, a quality measure.

In some embodiments, the method may further comprise acquiring an updated neighboring cell list comprising information relating to one or more second neighboring cells employing a second radio access technology, the one or more second neighboring cells being associated with the second cell, and discarding current neighboring cell information related to a neighboring cell comprised in the one or more first neighboring cells and not comprised in the one or more second neighboring cells.

The one or more first neighboring cells and the one or more second neighboring cells may be exactly the same cells. Alternatively, the one or more first neighboring cells and the one or more second neighboring cells may have no overlap at all (i.e. the one or more first neighboring cells and the one or more second neighboring cells being completely non-overlapping groups of cells). Yet alternatively, the one or more first neighboring cells and the one or more second neighboring cells may be partly overlapping groups of cells. For example, there may be cells in the one or more first neighboring cells that are not part of the one or more second neighboring cells and/or vice versa, while there are some cells that are part of both the one or more first neighboring cells and the one or more second neighboring cells.

In some embodiments, the method may further comprise performing measurements based on the updated neighboring cell list to update the current neighboring cell information.

In some embodiments, the method may further comprise basing a change of radio access technology decision on the current neighboring cell information.

A change of radio access technology may comprise one of a RAT re-selection (during an idle mode) and a RAT handover (during a connected mode).

In some embodiments, the first radio access technology may be in accordance to the Global System for Mobile communication (GSM) and the second radio access technology may be in accordance to one or more of the Universal Mobile Telecommunication Standard (UMTS), the Code Division Multiple Access 2000 standard (CDMA2000), and the UMTS Long Term Evolution standard (UMTS LTE). In some embodiments, the second radio access technology may comprise one or more of Wideband Code Division Multiple Access (WCDMA), Code Division Multiple Access (CDMA), Time Division Synchronous Code Division Multiple Access (TD-SCDMA), and Orthogonal Frequency Division Multiple Access (OFDMA).

In some embodiments, acquiring a neighboring cell list may comprise receiving broadcast system information.

A second aspect of the invention is a computer program product comprising a computer readable medium, having thereon a computer program comprising program instructions, the computer program being loadable into a data-processing unit for a user equipment having first and second radio access technology capability and registered in a first cell employing the first radio access technology, and the computer program being adapted to cause execution of method steps in accordance with the first aspect of the invention when the computer program is run by the data-processing unit.

A third aspect of the invention is an arrangement for a user equipment having first and second radio access technology capability. The arrangement comprises a list storing unit adapted to comprise - when the user equipment is registered in a first cell employing the first radio access technology - a neighboring cell list comprising information relating to one or more first neighboring cells employing the second radio access technology, the one or more first neighboring cells being associated with the first cell. The arrangement also comprises a measurement management unit adapted to cause a measurement unit to perform measurements based on the neighboring cell list to acquire a current neighboring cell information. The measurement management unit is adapted to - after a change of cell from the first cell to a second cell employing the first radio access technology has been performed - cause the measurement unit to perform measurements to update the current neighboring cell information based on the neighboring cell list comprising the one or more first neighboring cells.

In some embodiments, the arrangement may further comprise the measurement unit, a neighboring cell information storing unit adapted to comprise the current neighboring cell information, and an acquiring unit adapted to acquire and update the neighboring cell list.

In some embodiments, the storing unit is further adapted to comprise - after a change of cell from the first cell to a second cell employing the first radio access technology has been performed - an updated neighboring cell list comprising one or more second neighboring cells employing a second radio access technology, the one or more second neighboring cells being associated with the second cell. The measurement management unit may be further adapted to - based on the updated neighboring cell list - discard current neighboring cell information related to a neighboring cell comprised in the one or more first neighboring cells and not comprised in the one or more second neighboring cells.

In some embodiments, the measurement management unit may be further adapted to cause the measurement unit to perform measurements to update the current neighboring cell information based on the updated neighboring cell list comprising the one or more second neighboring cells.

In some embodiments, the arrangement may further comprise a radio access technology change management unit adapted to base a change of radio access technology decision on the current neighboring cell information.

A fourth aspect of the invention is an electronic device having first and second radio access technology capability and comprising the arrangement according to the third aspect of the invention.

In some embodiments, the electronic device may be one of: a mobile telephone, an electronic chip, a modem, and a telecommunication platform.

In some embodiments, the electronic device may be compliant with the Global System for Mobile communication (GSM) and one or more of the Universal Mobile Telecommunication Standard (UMTS), the Code Division Multiple Access 2000 (CDMA2000), and the UMTS Long Term Evolution (UMTS LTE).

In some embodiments, the third and fourth aspects of the invention may additionally have features identical with or corresponding to any of the various features as explained above for the first aspect of the invention.

Throughout the description the example of GSM corresponding to the first RAT and WCDMA corresponding to the second RAT is used. It should be noted that this is merely an example to illustrate advantages and embodiments of the invention and is not in any way meant as limiting the invention. Contrarily, embodiments of the invention are equally applicable in all suitable combinations of first and second RATs. For example, scenarios may be suitable where the first RAT corresponds to GSM and the second RAT corresponds to UMTS LTE, CDMA, TD-SCDMA, CDMA2000, UMTS, OFDMA, etc. Another scenario where embodiments of the invention may be applicable is when the first RAT corresponds to WCDMA and the second RAT corresponds to LTE.

It should be noticed that, although embodiments of the invention are described herein applied in scenarios where a UE in idle mode is considering RAT cell re-selection, embodiments of the invention may be equally applicable in scenarios where a UE in connected mode is considering RAT handover.

An advantage of some embodiments of the invention is that the average time spent in the first RAT (while the radio conditions actually justify a cell re-selection to the second RAT) may be reduced.

Another advantage of some embodiments of the invention is that the risk of losing connection (due to being out of range before all measurements have been completed) is reduced as a consequence of the possibility to make an early cell reselection decision.

Another advantage of some embodiments of the invention is that faster reselection to a more potent RAT typically gives improved throughput for data transfers. This is because less time is spent in the RAT having lower data throughput capabilities according to some embodiments of the invention.

### Brief Description of the Drawings

Further objects, features and advantages of the invention will appear from the following detailed description of embodiments of the invention, with reference being made to the accompanying drawings, in which:
Fig. 1 is a schematic drawing of parts of a cellular communication system;
Fig. 2 is a schematic signaling diagram illustrating a technical problem solved by some embodiments of the invention;
Fig. 3 is a flowchart illustrating example method steps according to some embodiments of the invention;
Fig. 4 is a block diagram illustrating an example arrangement according to some embodiments of the invention;
Fig. 5 is a schematic drawing illustrating a mobile terminal, which may comprise an arrangement according to some embodiments of the invention; and
Fig. 6 is a schematic drawing illustrating a computer program product according to some embodiments of the invention.

### Detailed Description

In the following, embodiments of the invention will be described where measurements are started for second RAT neighboring cells before all information regarding the second neighboring cells (e.g. cell identity) have been received.

A typical scenario when such an approach may be used is when a cell re-selection from a first cell of a first RAT to a second cell of the first RAT has just occurred. Then measurements may be started immediately in the second cell based on the knowledge of second RAT neighboring cells that was applicable in the first cell. Thus, it is initially assumed that the second cell has the same second RAT neighbors as did the first cell.

Information regarding which second RAT neighboring cells are actually applicable in the second cell may be received in parallel or after these measurements. When that information is received, the measurements that are not applicable in the second cell may be discarded while the measurements that are applicable also in the second cell are kept. If there are second RAT neighboring cells for the second cell that were not applicable in the first cell, completing measurements may be performed for those neighboring cells when the complete neighboring cell information has been received.

Thus, time until a RAT cell re-selection decision can be taken is (sometimes considerably) reduced whenever there is an overlap of second RAT neighboring cells between the first and second cell (which is very often the case in practice). For example, some cellular networks are typically planned with GSM and WCDMA cells overlapping each other. Thus, adjacent GSM cells very often have the same or a very similar ensemble of WCDMA neighboring cells.

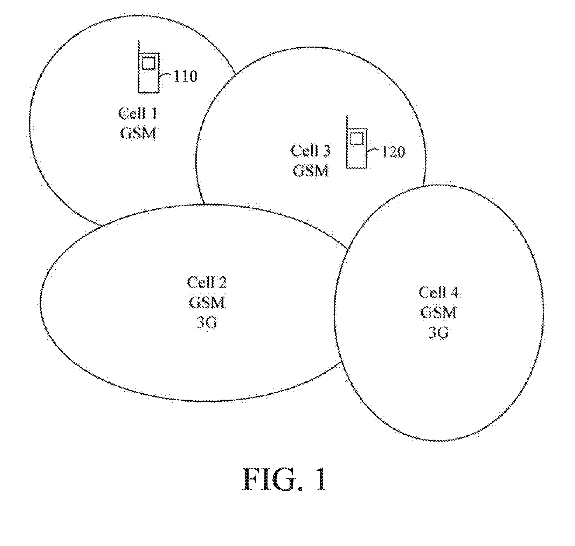

Figure 1 illustrates a schematic layout of a few GSM and WCDMA cells of an example cellular network. Cell 1 and cell 3 are GSM only cells, while cell 2 and cell 4 are cells supporting both GSM and 3G (e.g. WCDMA).

A mobile phone 110 residing in cell 1 (e.g. camping cell in idle mode and serving cell in connected/active mode) has cell 2 in its list of neighboring 3G cells. If the mobile phone 110 moves to cell 3 and a cell re-selection to cell 3 is performed (such that cell 3 becomes camping/serving cell), then 3G-measurements on cell 2 may be initiated and performed before a complete information regarding the 3G neighboring cells for cell 3 has been received by the mobile phone 110.

Eventually, the mobile phone 110 becomes aware (via received system information) that cell 4 is also a 3G neighboring cell, and can start 3G-measurements for cell 4.

Another mobile phone 120 residing in cell 3 (as camping/serving cell) has cell 2 and cell 4 in its list of neighboring 3G cells. If the mobile phone 120 moves to cell 1 and a cell re-selection to cell 1 is performed, then 3G-measurements on cell 2 and cell 4 may be initiated and performed before complete information regarding the 3G neighboring cells for cell 1 has been received by the mobile phone 120.

Eventually, the mobile phone 120 becomes aware (via received system information) that cell 4 is not a 3G neighboring cell, and can discard the corresponding 3G-measurements accordingly.

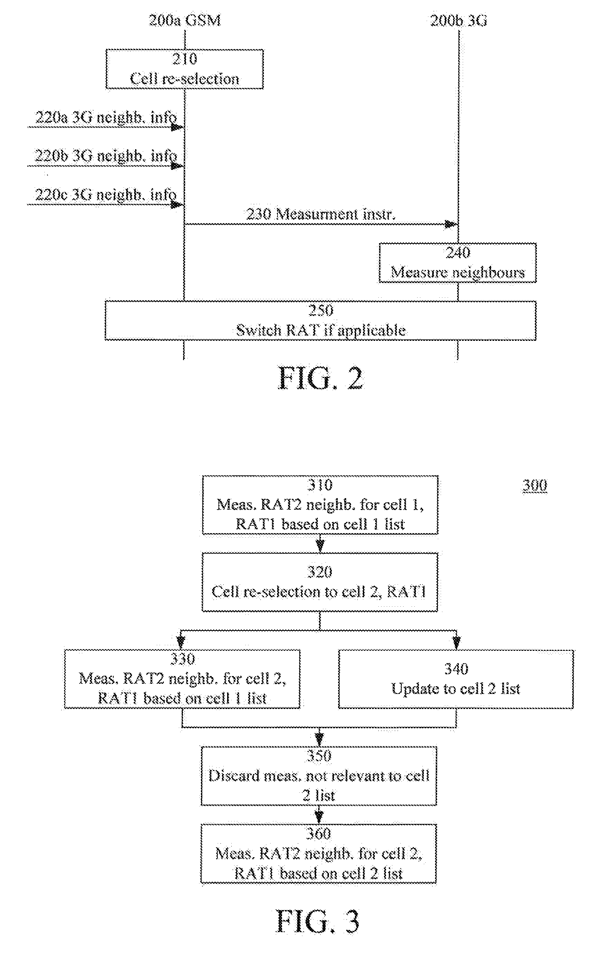

Figure 2 schematically illustrates, by way of a signaling diagram for a user equipment having GSM capabilities 200a and 3G capabilities 200b, a problem experienced by the prior art and solved by some embodiments of the invention.

It is assumed in Figure 2 that the UE is initially in GSM employment. A cell re-selection 210 occurs and new information regarding 3G neighboring cells is received 220a, 220b, 220c. This information may be split over several transmission instances or otherwise spread out over time. After the information regarding 3G neighboring cells has been received, the 3G functionality of the UE is instructed 230 to start measurements on the 3G neighboring cells. After measurements have been completed 240, it is possible for the UE to take a RAT cell re-selection decision if applicable 250. According to embodiments of the invention, the instructions 230 may be sent in parallel to or before receiving the information regarding 3G neighboring cells 220a, 220b, 220c. Consequently, the measurements 240 may be (at least partly - some completing measurements may have to be instructed and performed after receiving the information regarding 3G neighboring cells 220a, 220b, 220c) performed in parallel to or before receiving the information regarding 3G neighboring cells 220a, 220b, 220c. Hence, the switching decision 250 may be taken much sooner that in the prior art.

The switching decision 250 may be an autonomous function in the UE or it may be a function owned by one of the RAT entities (e.g. the currently active RAT, GSM in this case).

Figure 3 is a flowchart illustrating an example method 300 according to some embodiments of the invention.

The method 300 starts in step 310, where a communication device is registered in a first cell (cell 1) employing a first RAT (RAT1). The communication device has knowledge of the neighbors of cell 1 that employ a second RAT (RAT2). This knowledge has been acquired in some way (e.g. by reception of system information) and may be comprised in a neighboring cell list of the communication device. In step 310, the communication device may perform neighboring cell measurements based on the knowledge of the RAT2 neighbors of cell 1.

In step 320, a cell re-selection from cell 1 (RAT1) to a second cell (cell 2) employing RAT1, such that the communication device becomes registered in cell 2 (RAT1).

After the cell re-selection of step 320, the previous knowledge of the RAT2 neighbors of cell 1, may be applicable also to cell 2 (fully, partly, or not at all). To reach as soon as possible a situation where measurements the RAT2 neighbors of cell 2 are completed, it is initially assumed that the RAT2 neighbors of cell 1 are fully applicable also to cell 2. Thus, in step 330, the communication device performs neighboring cell measurements based on the knowledge of the RAT2 neighbors of cell 1.

In parallel to step 330, step 340 is performed, where the communication device acquires knowledge of the RAT2 neighbors of cell 2. This knowledge may be acquired in some way (e.g. by reception of system information) and may be used to update the neighboring cell list of the communication device.

It should be noted that steps 330 and 340 may not be performed completely in parallel. In some embodiments, for example, the measurements of step 330 may be completed before the knowledge of step 340 has been acquired.

In any case, when the knowledge of step 340 has been acquired, the measurements related to RAT2 neighbors of cell 1 that proved to not also be applicable to cell 2 may be discarded in step 350.

Then, in step 360, the communication device may perform neighboring cell measurements based on the knowledge of the RAT2 neighbors of cell 2. Typically, step 360 may comprise performing measurements for the RAT2 neighboring cells of cell 2 that were not in the neighboring cell list for cell 1.

When measurements have been completed for all RAT2 neighbors of cell 2, a cell re-selection to RAT2 may be considered.

It is noted that acquiring the neighboring cell knowledge (310, 340), performing the measurements (310, 330, 360), and taking RAT re-selection decisions (not shown in Figure 3) may be performed using any suitable known or future processes or algorithms.

Measurements may be started for all known RAT2 cells in parallel or the measurements may be performed for each of the known RAT2 cells in sequence.

In some embodiments, all measurements (240, 330, 360) are completed before RAT re-selection is considered. In other embodiments, RAT re-selection may be considered even after only some measurements are completed. For example, RAT re-selection might be considered just before step 360 or even just before step 350. In some embodiments, RAT re-selection might be considered even if step 340 is not complete.

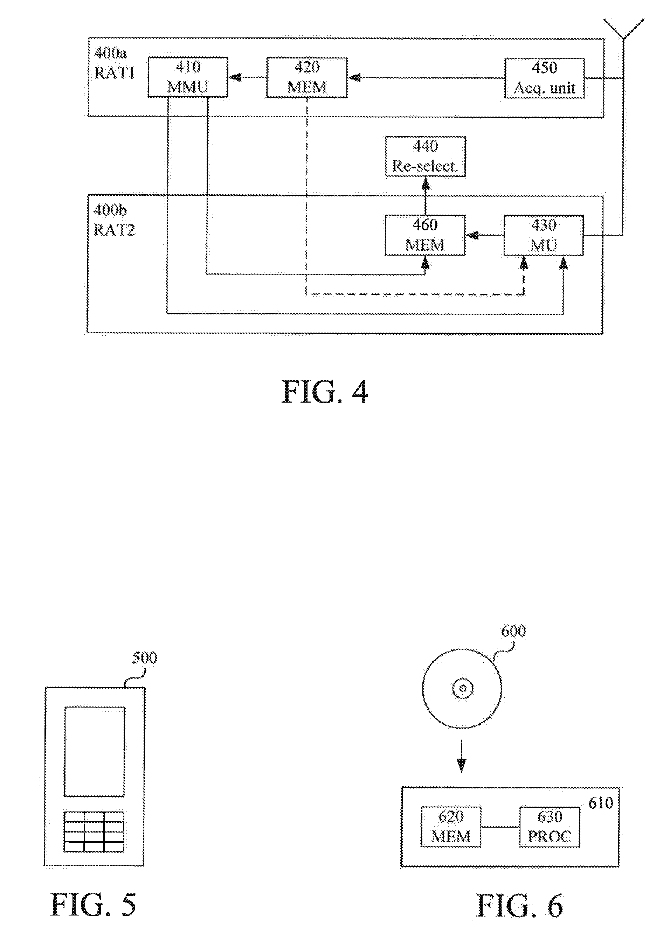

Figure 4 is a schematic block diagram illustrating an example arrangement according to some embodiments of the invention. The arrangement may, for example, be configured to perform some or all of the method steps described in connection to Figure 3.

The arrangement of Figure 4 is suitable for a user equipment having first (RAT1, 400a) and second (RAT2, 400b) radio access technology capabilities.

The arrangement comprises a memory (MEM) 420 in which a neighboring cell list can be stored. When the user equipment is registered in a first cell employing RAT1, the neighboring cell list typically comprises the RAT2 neighboring cells of the first cell. Knowledge of the RAT2 neighboring cells might be acquired via reception of system information by the acquiring unit (e.g. a radio receiver) 450.

The arrangement also comprises a measurement management unit (MMU) 410. The MMU 410 is adapted to instruct a measurement unit (MU) 430 to perform neighboring cell measurements based on the neighboring cell list of MEM 420. The result of such measurements may be stored in a memory (MEM) 460, and may be used as an input to a re-selection unit 440. The re-selection unit is at least adapted to make RAT re-selection decisions, but may also be adapted to make any cell re-selection decisions.

The MMU 410 is adapted to, after a cell re-selection from a first RAT1 cell to a second RAT1 cell has been performed, instruct the MU 430 to perform neighboring cell measurements based on the neighboring cell list of MEM 420 even though this list has not been updated after the cell re-selection.

When the acquiring unit 450, after a cell re-selection from a first RAT1 cell to a second RAT1 cell has been performed, receives knowledge of the RAT2 neighbors of the second cell, the list in MEM 420 is updated. As a response to such an update of the list of MEM 420, the MMU 410 is adapted to discard obsolete pieces of information of MEM 460 (if applicable) and instruct the MU 430 to perform neighboring cell measurements for the new posts of the neighboring cell list of MEM 420 (if applicable).

It should be noted that units described as separate units in the context of Figure 4 may, in some embodiments, be comprised in a single physical or functional unit. For example, MEM 420 and MEM 460 may be implemented as a single physical memory (possibly also storing other information). Alternatively or additionally, MEM 460 may be comprised in the measurement unit 430.

Similarly, a unit described as a single physical or functional unit in the context of Figure 4 may, in some embodiments, be implemented as several separate physical or functional units.

Furthermore, a unit that has been described as belonging to a certain RAT functionality in the context if Figure 4 may, in some embodiments, be implemented as part of the other RAT functionality or as an autonomous functionality, and vice versa. For example, the MMU and/or MEM 420, 460 may be implemented as autonomous functions.

Figure 5 illustrates an example mobile terminal 500. The mobile terminal 500 may comprise an arrangement for controlling neighboring cell measurements according to embodiments of the invention. The mobile terminal 500 may, for example, comprise an arrangement as described in connection to Figure 4.

The mobile terminal 500 is illustrated as a mobile telephone in a schematic front view. This example mobile terminal comprises an antenna mounted on the housing of the apparatus. Alternatively, the mobile terminal may have an internal antenna mounted within the housing of the apparatus. The mobile terminal may even comprise multiple antennas. The mobile terminal may further comprise a display, a keypad and/or touch screen, a loudspeaker, and a microphone, which together provides a man-machine interface for operating the mobile terminal.

The example mobile terminal 500 is adapted to connect to a mobile telecommunication network via the wireless link to a radio base station. To this end, the mobile terminal 500 may be capable of employing at least two radio access techniques, for instance corresponding to GSM and WCDMA.

The described embodiments of the invention and their equivalents may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of the invention.

The invention may be embodied within an electronic apparatus comprising circuitry according to any of the embodiments of the invention and/or performing methods according to any of the embodiments of the invention. The electronic apparatus may, for example, be a portable or handheld mobile radio communication equipment, a mobile radio terminal, a mobile telephone, a communicator, an electronic organizer, a smartphone, a computer, a notebook, an electronic chip, a modem, a telecommunication platform, a plug-in card, an embedded drive, a mobile gaming device, or a (wrist) watch.

According to some embodiments of the invention, a computer program product comprises a computer readable medium such as, for example, a diskette or a CD-ROM. Figure 6 shows an example of such a computer program product in the form of a CD-ROM 600. The computer readable medium may have stored thereon a computer program comprising program instructions. The computer program may be loadable into a data-processing unit 630, which may, for example, be comprised in an electronic device 610. When loaded into the data-processing unit 630, the computer program may be stored in a memory 620 associated with or integral to the data-processing unit 630. According to some embodiments, the computer program may, when loaded into and run by the data-processing unit 630, cause the data-processing unit to execute method steps according to, for example, the methods shown in Figure 3.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the scope of the invention is defined by the appended claims rather than by the description, and all variations that fall within the range of the claims are intended to be embraced therein.

## Claims

1. A method for a user equipment having first and second radio access technology capability and registered in a first cell employing the first radio access technology, the method comprising:
acquiring a neighboring cell list comprising information relating to one or more first neighboring cells employing the second radio access technology, the one or more first neighboring cells being associated with the first cell;
performing (310) measurements based on the neighboring cell list to acquire a current neighboring cell information;
performing (320) change of cell from the first cell to a second cell employing the first radio access technology; and
**characterized by**
performing (330) measurements to update the current neighboring cell information based on the neighboring cell list comprising the one or more first neighboring cells.

2. The method of claim 1, further comprising:
acquiring (340) an updated neighboring cell list comprising information relating to one or more second neighboring cells employing a second radio access technology, the one or more second neighboring cells being associated with the second cell; and
discarding (350) current neighboring cell information related to a neighboring cell comprised in the one or more first neighboring cells and not comprised in the one or more second neighboring cells.

3. The method of claim 2, further comprising:
performing (360) measurements based on the updated neighboring cell list to update the current neighboring cell information.

4. The method of any of claims 1 through 3, further comprising:
basing a change of radio access technology decision on the current neighboring cell information.

5. The method of any of claims 1 through 4, wherein the first radio access technology is in accordance to the Global System for Mobile communication - GSM - and the second radio access technology is in accordance to one or more of:
Universal Mobile Telecommunication Standard - UMTS;
Code Division Multiple Access 2000 - CDMA2000; and
UMTS Long Term Evolution - UMTS LTE; and/or comprises one or more of:
Wideband Code Division Multiple Access - WCDMA;
Code Division Multiple Access - CDMA;
Time Division Synchronous Code Division Multiple Access - TD-SCDMA; and
Orthogonal Frequency Division Multiple Access - OFDMA.

6. The method of any of claims 1 through 5, wherein acquiring a neighboring cell list comprises receiving broadcast system information.

7. A computer program product comprising a computer readable medium, having thereon a computer program comprising program instructions, the computer program being loadable into a data-processing unit for a user equipment having first and second radio access technology capability and registered in a first cell employing the first radio access technology, and the computer program being adapted to cause execution of the following steps when the computer program is run by the data-processing unit:
acquiring a neighboring cell list comprising information relating to one or more first neighboring cells employing the second radio access technology, the one or more first neighboring cells being associated with the first cell;
performing measurements based on the neighboring cell list to acquire a current neighboring cell information;
performing change of cell from the first cell to a second cell employing the first radio access technology; and
**characterized by**
performing measurements to update the current neighboring cell information based on the neighboring cell list comprising the one or more first neighboring cells.

8. An arrangement for a user equipment having first and second radio access technology capability, the arrangement comprising:
a list storing unit (420) adapted to comprise - when the user equipment is registered in a first cell employing the first radio access technology - a neighboring cell list comprising information relating to one or more first neighboring cells employing the second radio access technology, the one or more first neighboring cells being associated with the first cell; and
a measurement management unit (410) adapted to cause a measurement unit (430) to perform measurements based on the neighboring cell list to acquire a current neighboring cell information;
**characterized in that**
the measurement management unit (410) is adapted to - after a change of cell from the first cell to a second cell employing the first radio access technology has been performed - cause the measurement unit (430) to perform measurements to update the current neighboring cell information based on the neighboring cell list comprising the one or more first neighboring cells.

9. The arrangement of claim 8, further comprising:
the measurement unit (430);
a neighboring cell information storing unit (460) adapted to comprise the current neighboring cell information; and
an acquiring unit (450) adapted to acquire and update the neighboring cell list.

10. The arrangement of any of claims 8 through 9, wherein:
the storing unit (420) is further adapted to comprise - after a change of cell from the first cell to a second cell employing the first radio access technology has been performed - an updated neighboring cell list comprising one or more second neighboring cells employing a second radio access technology, the one or more second neighboring cells being associated with the second cell; and
the measurement management unit (410) is further adapted to - based on the updated neighboring cell list - discard current neighboring cell information related to a neighboring cell comprised in the one or more first neighboring cells and not comprised in the one or more second neighboring cells.

11. The arrangement of claim 10, wherein:
the measurement management unit (410) is further adapted to cause the measurement unit (430) to perform measurements to update the current neighboring cell information based on the updated neighboring cell list comprising the one or more second neighboring cells.

12. The arrangement of any of claims 8 through 11, further comprising:
a radio access technology change management unit (440) adapted to base a change of radio access technology decision on the current neighboring cell information.

13. An electronic device having first and second radio access technology capability and comprising the arrangement according to any of claims 8 through 12.

14. The electronic device according to claim 13, wherein the electronic device is one of: a mobile telephone, an electronic chip, a modem, and a telecommunication platform.

15. The electronic device of any of claims 13 through 14, wherein the electronic device is compliant with the Global System for Mobile communication - GSM - and one or more of:
the Universal Mobile Telecommunication Standard - UMTS;
Code Division Multiple Access 2000 - CDMA2000; and
UMTS Long Term Evolution - UMTS LTE.
